# EUROPÄISCHE PATENTSCHRIFT

(11) **EP 2 042 792 B1**
(45) Veröffentlichungstag und Bekanntmachung des Hinweises auf die Patenterteilung: **08.08.2012**
(21) Anmeldenummer: 08015442.0
(22) Anmeldetag: 02.09.2008
(51) Int. Cl.: F16K 31/06

(54) **Magnetventil mit einer Handhilfsbetätigung**
Magnetic valve with a handheld actuator
Soupape magnétique dotée d'un actionnement d'aide manuel

(30) Priorität: 20.09.2007 DE 102007045028
(43) Veröffentlichungstag der Anmeldung: 01.04.2009
(73) Patentinhaber: FESTO AG & Co. KG, 73734 Esslingen (DE)
(72) Erfinder: Clauss, Carsten, 73733 Esslingen (DE); Forcht, Ralf, 73240 Wendlingen (DE); Lederer, Thomas, 71394 Kernen (DE); Waldeck, Christian, 73734 Esslingen (DE)
(74) Vertreter: Kocher, Mark Werner

(56) Entgegenhaltungen:
- DE-A1- 3 134 756
- US-A- 6 111 514

## Beschreibung

Die Erfindung betrifft ein Magnetventil mit einer Handhilfsbetätigung nach der Gattung des Anspruchs 1.

Ein derartiges Magnetventil ist beispielsweise aus der DE 3941643 C1 bekannt, das mittels der mechanischen Handhilfsbetätigung ohne Strombeaufschlagung betätigt werden kann, sodass der Schaltzustand des Magnetventils dann nicht mehr vom Stromfluss abhängig ist. Hierdurch wird eine sichere Inbetriebnahme ermöglicht bevor eine Anordnung auch "elektrisch" arbeitet, also eine manuelle Ansteuerung von Aktoren, wie Zylinder, erreicht. Dies kann auch bei der Wartung von Vorteil sein. Bei den üblichen rastenden Handhilfsbetätigungen verbleibt der Magnetkern beziehungsweise das Ventilglied dann in der durch die Handhilfsbetätigung vorgegebenen Arbeitsstellung, bis wieder eine Entrastung erfolgt. Dies kann häufig zu Problemen führen, da bei einer vergessenen Rückstellung der Handhilfsbetätigung das Ventil im nachfolgenden Betrieb eine falsche Ventilstellung einnehmen kann. Beim Einsatz vieler Magnetventile, zum Beispiel in einer größeren Industrieanlage, ist es dann sehr schwierig, das oder die Magnetventile zu finden, bei denen vergessen worden ist, die Handhilfsbetätigung wieder zu lösen.

Man kann zwar gewöhnlich optisch die eingeschobene Position des Betätigungsglieds der Handhilfsbetätigung erkennen, allerdings nur bei genauem Hinsehen, sodass eine entsprechende Überprüfung einer Vielzahl von Magnetventilen sehr umständlich und aufwendig ist. Zusätzliche Sensoren, insbesondere Positionssensoren, zur Erkennung der Position des Ventilglieds machen ein Ventil kompliziert und teuer.

Eine Aufgabe der vorliegenden Erfindung besteht somit darin, ein Magnetventil mit einer Handhilfsbetätigung zu schaffen, bei dem die Stellung der Handhilfsbetätigung in einfacher Weise ohne zusätzliche Sensormittel erkannt werden kann.

Diese Aufgabe wird erfindungsgemäß durch ein Magnetventil mit den Merkmalen des Anspruchs 1 gelöst.

In vorteilhafter Weise kann erfindungsgemäß der Verbleib des Ventilglieds beziehungsweise des Magnetkerns in der Arbeitsstellung bei vergessener Rückstellung der Handhilfsbetätigung in einfacher Weise durch Überwachung des Stromflusses beim darauffolgenden Einschalten erkannt werden. Zusätzliche Sensoren sind hierzu nicht erforderlich. Die Erkennung erfolgt elektrisch, sodass ein entsprechendes Signal in einfacher Weise angezeigt und/oder an ein übergeordnetes System oder eine Steuerzentrale übermittelt werden kann. Auf diese Weise lassen sich auch bei einer großen Anzahl von Magnetventilen schnell und einfach diejenigen ermitteln, bei denen die Handhilfsbetätigung noch in der betätigten Stellung verblieben ist.

Durch die in den Unteransprüchen aufgeführten Maßnahmen sind vorteilhafte Weiterbildungen und Verbesserungen des im Anspruch 1 angegebenen Magnetventils möglich.

Die Spulenstrom-Überwachungseinrichtung weist zweckmäßigerweise ein Strommessglied, insbesondere einen Strommesswiderstand, im Schaltkreis der Magnetspulenanordnung auf. Dieses bildet einen Bestandteil der Spulenstrom-Überwachungseinrichtung und ist somit unabhängig vom Magnetventil selbst beziehungsweise von dessen mechanischer Anordnung.

In einer zweckmäßigen Ausgestaltung weist die Detektionseinrichtung einen Strom-Maximalwertspeicher für den Spulenstrom und eine bei Nichterreichen eines vorgebbaren Differenzwerts zwischen Spulenstrom und Strom-Maximalwert ein Signal in der Signalisierungseinrichtung erzeugende Schwellwertstufe auf. Dabei sind bevorzugt Einstellmittel zur Einstellung des vorgebbaren Differenzwerts vorgesehen, um Anpassungen an das jeweilige Magnetventil und dessen Stromverhalten vornehmen zu können. Zur Bildung des Differenzwerts ist dabei zweckmäßigerweise eine Subtrahierstufe vorgesehen.

Um mit derselben Spulenstrom-Überwachungseinrichtung neben der Erkennung einer nicht rückgestellten Position der Handhilfsbetätigung auch noch eine unkorrekte Bewegung des Magnetkerns erkennen zu können, sind in vorteilhafter Weise Mittel zur Erkennung eines zeitlich verschobenen Stromeinbruchs vorgesehen, wobei die Signalisierungsmittel zur Erzeugung eines diese unkorrekte Bewegung anzeigenden Signals ausgebildet sind.

Im Falle von optischen Signalisierungsmitteln weisen diese bevorzugt wenigstens eine LED auf. In einer bevorzugten konstruktiven Ausgestaltung des Magnetventils ist ein den Magnetkern in der Ruhestellung haltendes Federglied vorgesehen, wobei sowohl bei Betätigung durch die Handhilfsbetätigung als auch bei einer elektrischen Betätigung die Bewegungskraft gegen das Federglied gerichtet ist.

Ein Ausführungsbeispiel der Erfindung ist in der Zeichnung dargestellt und in der nachfolgenden Beschreibung näher erläutert. Es zeigen:
- Figur 1: ein schematisch dargestelltes Magnetventil in seiner geschlossenen Ruhestellung,
- Figur 2: dasselbe Magnetventil in seiner durch die Handhilfsbetätigung bewirkten geöffneten Arbeitsstellung,
- Figur 3: ein Blockschaltbild einer Spulenstrom-Überwachungseinrichtung zur Erläuterung der Wirkungsweise,
- Figur 4: ein Signaldiagramm, das den Einschaltstrom bei sich bewegendem Magnetkern zeigt,
- Figur 5: ein Signaldiagramm, das den Einschaltstrom bei in der Arbeitsstellung durch die Handhilfsbetätigung gehaltenem Magnetkern zeigt,
- Figur 6: ein Signaldiagramm, das den Einschaltstrom bei sich regulär bewegendem Magnetkern und verzögert bewegendem Magnetkern zeigt, und
- Figur 7: ein Schaltbild einer Detektionseinrichtung zur Detektion des Ausbleibens eines sich durch Bewegung des Magnetkerns nach dem Einschalten ausbildenden Stromeinbruchs.

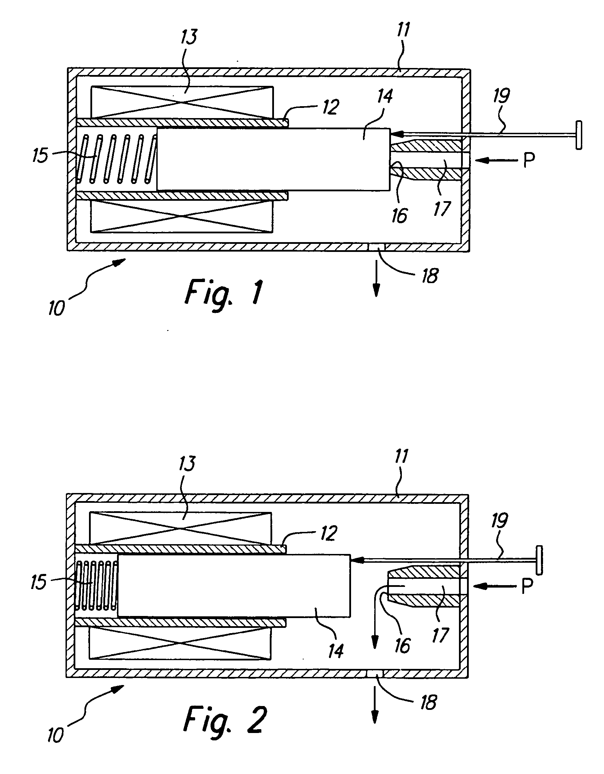

In den Figuren 1 und 2 ist schematisch ein Magnetventil 10 dargestellt, wie es in vielen Variationen bekannt ist. In einem Ventilgehäuse 11 ist ein rohrförmiger Spulenhalter 12 angeordnet, auf dem eine Magnetspule 13 fixiert ist. Im Spulenhalter 12 ist ein als Ventilglied ausgebildeter Magnetkern 14 verschiebbar geführt. Wird die Magnetspule 13 mit Strom beaufschlagt, so wird der Magnetkern 14 gegen die Kraft einer Druckfeder 15 in den Spulenhalter 12 hineinbewegt und gibt dadurch einen zuvor in der Ruhestellung verschlossenen Ventilsitz 16 frei. Ein mit einem Druck P beaufschlagbarer Fluidzuführungskanal 17 mündet am Ventilsitz 16. Befindet sich der Magnetkern 14 in der in Figur 2 dargestellten Arbeitsstellung, so kann Fluid durch den Fluidzuführungskanal 17 und den Ventilsitz 16 zu einem Ausgangsanschluss 18 strömen.

Der Magnetkern 14 ist im Ausführungsbeispiel als Plunger dargestellt, der gleichzeitig das Ventilglied bildet. Es ist jedoch auch möglich, dass ein anders gestalteter Magnetkern über ein Verbindungsglied mit einem Ventilglied verbunden ist. Weiterhin sind auch mehrteilige Magnetspulenanordnungen möglich. Das nur schematisch dargestellte Ventil kann in bekannter Weise auch verschiedene Fluiddurchgänge aufweisen und schalten und kann als Einweg- oder Mehrwegventil ausgebildet sein.

Ein mechanisches Betätigungsglied 19 einer Handhilfsbetätigung wirkt mechanisch auf den Magnetkern 14 und dient dazu, das Magnetventil 10 ohne Bestromung der Magnetspule 13 zu betätigen. Die mechanische Betätigung hat Vorrang, und der Schaltzustand des Magnetventils hängt dann nicht mehr vom Stromfluss ab. Wird der Magnetkern 14 mittels des Betätigungsglieds 19 in die Arbeitsstellung geschoben, so erfolgt dort eine nicht dargestellte Verrastung, sodass der Magnetkern 14 dann in der Arbeitsstellung verbleibt, bis eine Entrastung erfolgt, die entweder mittels des Betätigungsglieds 19 oder einer separaten Entrastungseinrichtung erfolgen kann.

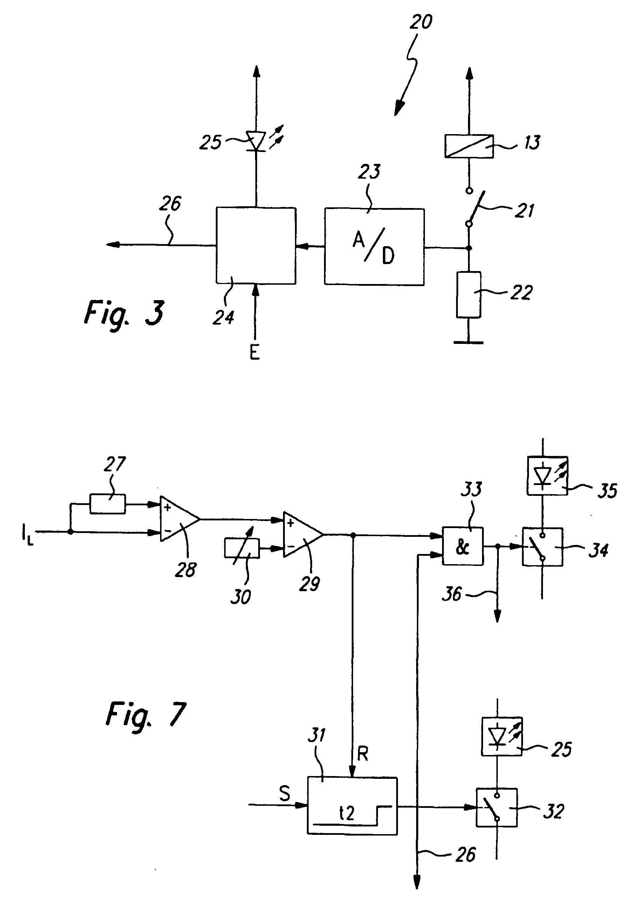

Die in Figur 3 als Blockschaltbild dargestellte Spulenstrom-Überwachungseinrichtung 20 dient zur Überprüfung der Position des Magnetkerns 14, also ob dieser sich noch in der durch das Betätigungsglied 19 bewirkten und verrasteten Arbeitsstellung befindet. Ist beispielsweise versehentlich eine Entrastung unterblieben, sodass der Magnetkern 14 unabhängig vom Stromfluss durch die Magnetspule 13 in der Arbeitsstellung gehalten wird, so kann dies beim nachfolgenden Betrieb zu unangenehmen Störungen und Wirkungen innerhalb einer Maschine bzw. Anlage führen. Durch die Spulenstrom-Überwachungseinrichtung 20 wird daher geprüft, ob sich der Magnetkern 14 beim Einschalten der Magnetspule in der regulären Ruhestellung oder in einer durch die Handhilfsbetätigung bewirkten Arbeitsstellung befindet.

Die Magnetspule 13 bildet zusammen mit einem Schalter 21 und einem Strommesswiderstand 22 eine Reihenschaltung, an die die Versorgungs- beziehungsweise Betriebsspannung angelegt ist oder wird. Die am Strommesswiderstand 22 abgegriffene, stromabhängige Spannung wird über einen Analog-/Digital-Wandler 23 einer Detektionseinrichtung 24 zugeführt, wie sie beispielhaft in Figur 7 dargestellt ist. Selbstverständlich ist prinzipiell auch eine analoge Auswertung möglich, also die direkte Auswertung der am Strommesswiderstand 22 abgegriffenen Spannung.

Wird in der Detektionseinrichtung 24 festgestellt, dass beim Einschalten des Schalters 21 der Magnetkern 14 bereits in fehlerhafter Weise die Arbeitsstellung einnimmt, so wird dies optisch durch eine LED 25 angezeigt, wobei prinzipiell auch andere optische oder akustische Anzeigemittel, wie ein Display, ein Warnton oder dergleichen, dienen können. Weiterhin kann eine entsprechende Warnmeldung oder Signalisierung des erkannten Zustands des Magnetkerns 14 über eine Meldeleitung 26 einer Steuerzentrale oder einem anderen übergeordneten System gemeldet werden. Dies kann auch drahtlos über Funk, Infrarot oder dergleichen erfolgen.

Zur Anpassung der Detektionseinrichtung 24 an unterschiedliche Magnetventile 10, Toleranzen oder unterschiedliche Eigenschaften eines Magnetventils können die Einstellparameter E für die Detektionseinrichtung 24 verändert werden.

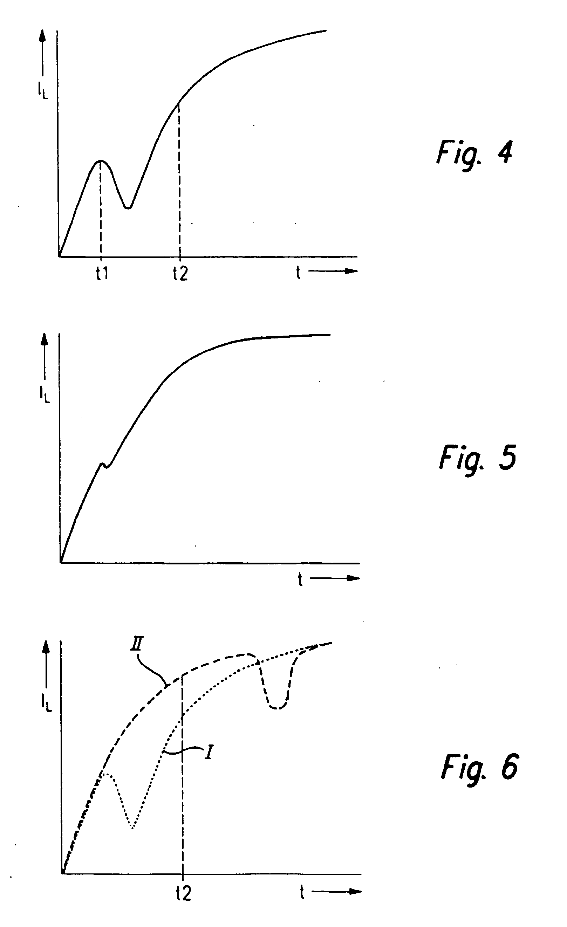

In Figur 4 ist ein Stromverlauf des Spulenstroms I_{L} durch die Magnetspule 13 dargestellt, wie er sich nach dem Einschalten und bei einer Bewegung des Magnetkerns 14 von der Ruhestellung in die Arbeitsstellung ausbildet. Der Magnetkern 14 setzt sich erst verzögert zum Zeitpunkt t1 in Bewegung, nachdem das erforderliche Magnetfeld aufgebaut ist. Während der Bewegung des Magnetkerns 14 erfolgt zunächst ein Stromeinbruch infolge Induktion. Erst danach erfolgt dann ein weiterer Stromanstieg bis zu einem Maximalwert.

In Figur 5 ist der Stromverlauf I_{L} dargestellt, wie er sich ausbildet, wenn sich der Magnetkern 14 zum Einschaltzeitpunkt bereits in der Arbeitsstellung befindet, in die er zuvor durch die Handhilfsbetätigung gebracht und dort verrastet worden ist. Der Magnetkern 14 kann sich daher beim Einschalten des Stroms nicht oder infolge eines Spiels in der Raststellung nur ganz gering bewegen, sodass nur ein sehr geringer Stromeinbruch - wie dargestellt - oder gar kein Stromeinbruch die Folge ist.

In Figur 6 sind zwei Stromverläufe dargestellt. Der Stromverlauf I entspricht dem in Figur 4 dargestellten Stromverlauf und zeigt die Verhältnisse bei sich ordnungsgemäß bewegendem Magnetkern 14 von der Ruhestellung in die Arbeitsstellung. Die Stromkurve II zeigt einen verzögerten Beginn der Bewegung des Magnetkerns 14, sodass der Stromeinbruch wesentlich später erfolgt. Dies ist beispielsweise auf Verschmutzung, Alterung oder einen sonstigen Fehler zurückzuführen und stellt in jedem Falle ein fehlerhaftes Verhalten des Magnetventils dar, das ebenfalls ausgewertet und angezeigt werden kann, wie in Verbindung mit Figur 7 noch näher dargelegt wird.

Die in Figur 3 schematisch und in Figur 7 detaillierter und beispielhaft dargestellte Detektionseinrichtung 24 dient zur Erkennung, ob das in Figur 4 dargestellte reguläre Verhalten des Magnetkerns 14 oder das in Figur 5 dargestellte Verhalten vorliegt, das durch eine Verrastung des Magnetkerns 14 in der Arbeitsstellung bewirkt wird.

Der Messwert des Spulenstroms I_{L} wird gemäß Figur 3 als digitaler Wert oder alternativ auch als analoger Wert einem Strom-Maximalwertspeicher 27 zugeführt, in dem jeweils der maximale angelegte Stromwert gespeichert wird. Dieser Strom-Maximalwert wird in einer Subtrahierstufe 28 mit dem jeweils aktuellen Messwert verglichen. Bis zum Zeitpunkt t1 entspricht der Strom-Maximalwert dem aktuellen Messwert, sodass das Ausgangssignal der Subtrahierstufe 28 Null ist. Nach dem Zeitpunkt t1 vergrößert sich die Differenz infolge des Stromeinbruchs, sodass der Ausgangswert der Subtrahierstufe 28 ansteigt. Dieser wird in einer Schwellwertstufe 29 mit einem Einstellparameterwert verglichen, der variabel durch eine Vorgabeeinrichtung 30 vorgegeben werden kann. Dieser Einstellparameterwert wird so gewählt, dass er bei ordnungsgemäßem Stromverlauf gemäß Figur 4 überschritten wird, sodass die Schwellwertstufe 29 ein den ordnungsgemäßen Stromverlauf anzeigendes Ausgangssignal erzeugt, während dieser Einstellparameterwert bei dem geringen Stromeinbruch gemäß Figur 5 oder bei vollständig ausbleibendem Stromeinbruch nicht erreicht wird, sodass kein Ausgangssignal erzeugt wird. Dieses nur sehr kurze Ausgangssignal wird z.B. in einer nachgeschalteten, nicht dargestellten Speicheranordnung gespeichert und liegt dann weiterhin an.

Ein Zeitverzögerungsglied 31 wird durch ein Schaltsignal S des Schalters 21 getriggert und erzeugt nach einer Verzögerungszeit t2 ein Ausgangssignal, durch das die LED 25 über einen Schalter 32 eingeschaltet wird. Gleichzeitig erfolgt die bereits beschriebene Fehlermeldung über die Meldeleitung 26. Die Verzögerungszeit t2 ist so eingestellt, dass zu diesem Zeitpunkt gemäß Figur 4 der reguläre, durch die Bewegungsaufnahme des Magnetkerns 14 bewirkte Stromeinbruch abgeschlossen sein müsste. Erfolgt jedoch dieser Stromeinbruch, so wird über den Ausgang der Schwellwertstufe 29 das Zeitverzögerungsglied 31 rückgesetzt beziehungsweise deaktiviert, sodass kein Schaltsignal zum Einschalten der LED 25 erzeugt werden kann. Durch das Einschalten der LED 25 wird daher zuverlässig angezeigt, dass sich der Magnetkern 14 in unerwünschter Weise in der Arbeitsstellung befindet beziehungsweise dort verrastet ist.

Um auch eine fehlerhafte verspätete Bewegung beziehungsweise Bewegungsaufnahme des Magnetkerns 14 anzeigen zu können, wie dies durch die Stromkurve II in Figur 6 dargestellt ist, wird das Ausgangssignal der Schwellwertstufe 29 und das Ausgangssignal des Zeitverzögerungsglieds 31 einem UND-Glied 33 zugeführt, durch dessen Ausgang ein Schalter 34 zum Einschalten einer weiteren LED 35 betätigbar ist. Über eine weitere Meldeleitung 36 kann ein entsprechendes Warnsignal einer übergeordneten Steuerung zugeleitet werden, wobei die Meldeleitungen 26, 36 auch eine gemeinsame Meldeleitung bilden können oder die Warn- beziehungsweise Informationssignale werden drahtlos übermittelt.

Erfolgt der Stromeinbruch in regulärer Weise gemäß der Stromkurve I, also vor dem Zeitpunkt t2, so liegt am Ausgang des Zeitverzögerungsglieds 31 noch kein Signal an, sodass das UND-Glied 33 sperrt und die LED 35 nicht einschaltet. Erfolgt dagegen der Stromeinbruch gemäß der Stromkurve II nach dem Zeitpunkt t2 und liegt am Ausgang des Zeitverzögerungsglieds 31 kurz vor dessen Rücksetzung noch ein Signal an, so schaltet das UND-Glied 33 die LED 35 ein und meldet eine verspätete Bewegung des Magnetkerns 14, wobei auch ein entsprechendes Meldesignal zusätzlich oder alternativ abgesetzt wird. Auch bei einem verspäteten Stromeinbruch gemäß der Stromkurve II erfolgt eine Rücksetzung beziehungsweise Deaktivierung des Zeitverzögerungsglieds 31, sodass eine bereits eingeschaltete LED 25 wieder ausgeschaltet wird. Da zwischen Ein- und Ausschalten in einem solchen Fall nur wenige ms liegen, tritt das Einschalten optisch nur sehr kurz in Erscheinung. Um zu verhindern, dass auch die LED 35 bei dieser Rücksetzung ausgeschaltet wird, ist dem UND-Glied 33 eine nicht dargestellte Speicheranordnung nachgeschaltet oder das UND-Glied 33 selbst besitzt einen entsprechenden Signalspeicher.

Bei komplexen Steuerungen mit einer Vielzahl von Magnetventilen können beispielsweise alle Magnetventile kurzzeitig ein- und ausgeschaltet werden, um in der beschriebenen Weise eventuell in der Arbeitsstellung verriegelte Magnetventile erkennen zu können. Bei einer normalen Betriebsaufnahme erfolgt dann die Meldung jeweils dann, wenn ein verriegeltes Ventil angesteuert wird, wobei nach einer entsprechenden Meldung eine Entriegelung vorgenommen werden kann.

Die mit Hilfe des in Figur 7 dargestellten Schaltbilds beschriebenen Funktionen der Detektionseinrichtung 24 können selbstverständlich auch digital mit Hilfe eines Mikrocontrollers, PLD oder ASIC realisiert werden. Dabei kann auch der A/D-Wandler 23 in einer solchen Anordnung der Detektionseinrichtung 24 integriert sein.

Die Erfindung wird anhand eines einzelnen Magnetventils erläutert. Sie ist selbstverständlich entsprechend auch bei einer Multipol- oder Feldbus-Ventilbatterie (Ventilinsel) anwendbar. Die Signale der Meldeleitungen 26, 36 können beispielsweise einer gemeinsamen Feldbusstation oder einer sonstigen gemeinsamen Steuereinrichtung zugeführt werden und von dort seriell oder parallel einer übergeordneten Steuerung zugeführt werden.

## Patentansprüche

1. Magnetventil mit einer Handhilfsbetätigung, durch deren Betätigungsglied (19) ein als Ventilglied dienender oder mit einem Ventilglied verbundener Magnetkern (14) ohne Erregung einer ihm zugeordneten Magnetspulenanordnung (13) von einer Ruhestellung in eine Arbeitsstellung verschiebbar ist, und mit Erkennungsmitteln zur Erkennung der durch die Handhilfsbetätigung in der Arbeitsstellung gehaltenen Position des Magnetkerns (14), **dadurch gekennzeichnet, dass** als Erkennungsmittel eine den Spulenstromanstieg nach dem Einschalten der Magnetspulenanordnung (13) überwachende Spulenstrom-Überwachungseinrichtung (20) vorgesehen ist, die eine Detektionseinrichtung (24) zur Detektion des Ausbleibens eines sich durch Bewegung des Magnetkerns (14) nach dem Einschalten ausbildenden Stromeinbruchs und eine Signalisierungseinrichtung (25, 26) zur elektrischen Signalisierung einer durch die Handhilfsbetätigung in der Arbeitsstellung gehaltenen Position des Magnetkerns (14) bei Ausbleiben dieses Stromeinbruchs aufweist.

2. Magnetventil nach Anspruch 1, **dadurch gekennzeichnet, dass** die Spulenstrom-Überwachungseinrichtung (20) ein Strommessglied, insbesondere einen Strommesswiderstand, im Schaltkreis der Magnetspulenanordnung (13) aufweist.

3. Magnetventil nach Anspruch 1 oder 2, **dadurch gekennzeichnet, dass** die Detektionseinrichtung (24) einen Strom-Maximalwertspeicher (27) für den Spulenstrom und eine bei Nichterreichen eines vorgebbaren Differenzwerts zwischen Spulenstrom und Strom-Maximalwert ein Signal in der Signalisierungseinrichtung erzeugende Schwellwertstufe (29) aufweist.

4. Magnetventil nach Anspruch 3, **dadurch gekennzeichnet, dass** Einstellmittel (30) zur Einstellung des vorgebbaren Differenzwerts vorgesehen sind.

5. Magnetventil nach Anspruch 3 oder 4, **dadurch gekennzeichnet, dass** eine Subtrahierstufe (28) zur Bildung des Differenzwerts vorgesehen ist.

6. Magnetventil nach einem der Ansprüche 3 bis 5, **dadurch gekennzeichnet, dass** Mittel (31, 33) zur Erkennung eines zeitlich verschobenen Stromeinbruchs vorgesehen sind, und dass Signalisierungsmittel (35, 36) zur Erzeugung eines eine unkorrekte Bewegung des Magnetkerns (14) anzeigenden Signals für diesen Fall ausgebildet sind.

7. Magnetventil nach einem der vorhergehenden Ansprüche, **dadurch gekennzeichnet, dass** die Signalisierungsmittel (25, 26, 35, 36) als optische und/oder akustische Signalisierungsmittel und/oder zur Absendung eines elektrischen Signals an eine Steuerzentrale oder ein übergeordnetes System ausgebildet sind.

8. Magnetventil nach Anspruch 7, **dadurch gekennzeichnet, dass** die Signalisierungsmittel (25, 26, 35, 36) wenigstens eine LED aufweisen.

9. Magnetventil nach einem der vorhergehenden Ansprüche, **dadurch gekennzeichnet, dass** der als Ventilglied dienende Magnetkern (14) als Plunger ausgebildet ist.

10. Magnetventil nach einem der vorhergehenden Ansprüche, **dadurch gekennzeichnet, dass** ein den Magnetkern (14) in der Ruhestellung haltendes Federglied (15) vorgesehen ist.

11. Magnetventil nach einem der vorhergehenden Ansprüche, **dadurch gekennzeichnet, dass** die Handhilfsbetätigung Mittel zum Festhalten des Magnetkerns (14) in der Arbeitsstellung nach Betätigung durch das Betätigungsglied (19) aufweist.

12. Magnetventil nach einem der vorhergehenden Ansprüche, **dadurch gekennzeichnet, dass** die Detektionseinrichtung (24) als Mikrocontroller, PLD oder ASIC aisgebildet ist oder einen solchen enthält.

13. Magnetventil nach einem der vorhergehenden Ansprüche, **dadurch gekennzeichnet, dass** in der Detektionseinrichtung (24) ein A/D-Wandler (23) integriert ist oder dass der Detektionseinrichtung (24) ein solcher A/D-Wandler (23) vorgeschaltet ist.

## Claims

1. Solenoid valve with manual auxiliary actuator with an actuating element (19) which may be used to shift a magnet core (14) used as or connected to a valve member from a rest position into an operating position without exciting a magnet coil assembly (13) assigned to it, and with identification means to identify the position of the magnet core (14) held by the manual auxiliary actuator in the operating position, **characterised in that** provided as identification means is a coil current monitoring device (20) which monitors the coil current rise after switching-on of the magnet coil assembly (13) and which has a detection device (24) to detect the non-appearance of a current drop developing after switch-on due to movement of the magnet core (14), and a signalling device (25, 26) for the electrical signalling of a position of the magnet core (14) held by the manual auxiliary actuator in the operating position during non-appearance of this current drop.

2. Solenoid valve according to claim 1, **characterised in that** the coil current monitoring device (20) has a current measuring element, in particular a shunt, in the circuit of the magnet coil assembly (13).

3. Solenoid valve according to claim 1 or 2, **characterised in that** the detection device (24) has an electric circuit current maximum value memory (27) for the coil current, and a threshold stage (29) which generates a signal in the signalling device if a presettable differential value between coil current and current maximum value is not reached.

4. Solenoid valve according to claim 3, **characterised in that** setting means (30) are provided for setting the presettable differential value.

5. Solenoid valve according to claim 3 or 4, **characterised in that** a subtraction stage (28) is provided to form the differential value.

6. Solenoid valve according to any of claims 3 to 5, **characterised in that** means (31, 33) are provided to detect a time-shifted current drop, and that signalling means (35, 36) are designed to generate a signal for this situation, indicating an incorrect movement of the magnet core (14).

7. Solenoid valve according to any of the preceding claims, **characterised in that** the signalling means (25, 26, 35, 36) are in the form of optical and/or audible signalling means and/or are designed to send an electrical signal to a control centre or a higher-level system.

8. Solenoid valve according to claim 7, **characterised in that** the signalling means (25, 26, 35, 36) have at least one LED.

9. Solenoid valve according to any of the preceding claims, **characterised in that** the magnet core (14) serving as valve member is in the form of a plunger.

10. Solenoid valve according to any of the preceding claims, **characterised in that** a spring element (15) holding the magnet core (14) in the rest position is provided.

11. Solenoid valve according to any of the preceding claims, **characterised in that** the manual auxiliary actuator has means of holding the magnet core (14) securely in the operating position after actuation by the actuating element (19).

12. Solenoid valve according to any of the preceding claims, **characterised in that** the detection device (24) is in the form of or contains a microcontroller, PLD or ASIC.

13. Solenoid valve according to any of the preceding claims, **characterised in that** an A/D converter (23) is integrated in the detection device (24) or that the detection device (24) is provided with such a A/D converter (23).

## Revendications

1. Vanne magnétique dotée d'un actionnement d'aide manuelle, par l'élément d'actionnement (19) duquel un noyau d'aimant (14) faisant office d'élément de vanne ou relié à un élément de vanne peut coulisser sans excitation d'un agencement de bobine d'aimant (13) qui lui est attribué d'une position de repos dans une position de travail, et de moyens de reconnaissance pour la reconnaissance de la position du noyau d'aimant (14), qui est maintenue par l'actionnement d'aide manuelle dans la position de travail, **caractérisée en ce qu'**un dispositif de contrôle de courant de bobine (20) contrôlant l'augmentation de courant de bobine après la mise en route de l'agencement de bobine d'aimant (13) est prévu comme moyen de reconnaissance, lequel dispositif présente un dispositif de détection (24) pour la détection de l'absence d'un effondrement de courant se formant par déplacement du noyau d'aimant (14) après la mise en route et présente un dispositif de signalisation (25, 26) pour la signalisation électrique d'une position, maintenue par l'actionnement d'aide manuelle dans la position de travail, du noyau d'aimant (14) en cas d'absence de cet effondrement de courant.

2. Vanne magnétique selon la revendication 1, **caractérisée en ce que** le dispositif de contrôle de courant de bobine (20) présente un élément de mesure de courant, en particulier une résistance de mesure de courant, dans le circuit de l'agencement de bobine d'aimant (13).

3. Vanne magnétique selon la revendication 1 ou 2, **caractérisée en ce que** le dispositif de détection (24) présente une mémoire de valeur maximale de courant (27) pour le courant de bobine et un niveau de valeur seuil (29) générant un signal dans le dispositif de signalisation lorsqu'une valeur de différence pouvant être prédéfinie entre le courant de bobine et la valeur maximale de courant n'est pas atteinte.

4. Vanne magnétique selon la revendication 3, **caractérisée en ce que** des moyens de réglage (30) sont prévus pour le réglage de la valeur de différence pouvant être prédéfinie.

5. Vanne magnétique selon la revendication 3 ou 4, **caractérisée en ce qu'**un niveau de soustraction (28) est prévu pour former la valeur de différence.

6. Vanne magnétique selon l'une quelconque des revendications 3 à 5, **caractérisé en ce que** des moyens (31, 33) sont prévus pour la reconnaissance d'un effondrement de courant décalé dans le temps, et **en ce que** des moyens de signalisation (35, 36) sont conçus pour générer un signal indiquant un déplacement incorrect du noyau d'aimant (14) pour ce cas.

7. Vanne magnétique selon l'une des revendications précédentes, **caractérisé en ce que** les moyens de signalisation (25, 26, 35, 36) sont conçus comme des moyens de signalisation optiques et/ou acoustiques et/ou pour l'envoi d'un signal électrique à une commande de centrale ou un système prioritaire.

8. Vanne magnétique selon la revendication 7, **caractérisé en ce que** les moyens de signalisation (25, 26, 35, 36) présentent au moins une LED.

9. Vanne magnétique selon l'une des revendications précédentes, **caractérisé en ce que** le noyau d'aimant (14) faisant office d'élément de vanne est conçu comme piston plongeur.

10. Vanne magnétique selon l'une des revendications précédentes, **caractérisée en ce qu'**un élément à ressort (15) maintenant le noyau d'aimant (14) dans la position de repos est prévu.

11. Vanne magnétique selon l'une des revendications précédentes, **caractérisée en ce que** l'actionnement d'aide manuelle présente des moyens pour le maintien du noyau d'aimant (14) dans la position de travail après l'actionnement par l'élément d'actionnement (19).

12. Vanne magnétique selon l'une des revendications précédentes, **caractérisée en ce que** le dispositif de détection (24) est conçu comme microcontrôleur, PLD ou ASIC ou contient un tel élément.

13. Vanne magnétique selon l'une des revendications précédentes, **caractérisée en ce qu'**un convertisseur analogique/numérique (23) est intégré dans le dispositif de détection (24) ou **en ce qu'**un tel convertiseur analogique/numérique (23) est monté en amont du dispositif de détection (24).
